# EUROPEAN PATENT SPECIFICATION

(11) **EP 2 856 266 B1**
(45) Date of publication and mention of the grant of the patent: **23.09.2015**
(21) Application number: 12726777.1
(22) Date of filing: 29.05.2012
(51) Int. Cl.: G05B 19/042, G06T 7/00, H04N 5/232

(54) **OBJECT INSPECTION IN AN INDUSTRIAL PLANT**
OBJEKTINSPEKTION IN EINER INDUSTRIEANLAGE
INSPECTION D'OBJETS DANS UNE INSTALLATION INDUSTRIELLE

(43) Date of publication of application: 08.04.2015
(73) Proprietor: ABB Research Ltd., 8050 Zürich (CH)
(72) Inventor: BRÖNMARK, Jonas, S-722 27 Västerås (SE); OLAUSSON, Martin, S-724 82 Västerås (SE); VARTIAINEN, Elina, S-722 18 Västerås (SE)
(74) Representative: Lundqvist, Alida Maria Therése
(86) International application number: PCT/EP2012/060000
(87) International publication number: WO 2013/178248

(56) References cited:
- WO-A1-2008/079762
- WO-A1-2012/016014
- US-A1- 2010 315 416
- US-B1- 6 415 979

## Description

### FIELD OF THE INVENTION

The present invention generally relates to industrial plants. More particularly the present invention relates to a method, inspecting device and computer program product for enabling a user in an industrial plant to inspect an object of the plant.

### BACKGROUND

In the facilities of industrial plants there may occur situations where maintenance engineers need to look at activities occurring at objects, such as plant equipment.

When for instance conducting daily morning inspection rounds at a plant, plant maintenance engineers may need to check the status of plant equipment. User studies show that while doing these rounds, the engineers use paper and a pen to write down remarks about possible problem areas and needed fixes. Afterwards when the plant maintenance engineers return to their office location, they have added these notes to a computer system by use of a desktop computer.

In many plants mobile devices and digital cameras have been recently introduced to assist the plant maintenance engineers in their daily work tasks. The engineers now take photos of problem areas or issues by using the camera. These photos together with notes taken may later be shared with colleagues or documented.

The photos may also later get compared with earlier photos taken of the equipment if the plant maintenance engineers want to follow a progress of equipment to figure out if there is a potential problem occurring in the future. In the user studies, one such scenario was to follow a water leakage at a plant by taking photos of the area during several days.

There is however a problem in locating the correct object for the comparison. There may for instance exist a great number of the same type of objects at different locations in the plant.

Even if the correct object is located it is not certain that a good comparison can be made, since the object may be captured from different angles that may not be simple to compare.

There have been developed some useful ideas in the field of consumer devices.

US 2011/0128395 does for instance describe how a user of a mobile terminal can choose to see differences between a reference image and a preview image, then compare the reference image with the preview image and display the comparison result. The document also mentions that the preview image may be overlaid on the reference image. The document further describes how the preview image is displayed on a display and then captured to generate a comparison image. The examples of use given are all related to portrait images.

WO 2011/071861 describes matching of a captured image with a reference image using location information. In this document an image is first captured and then a reference image is fetched for being compared. The document describes the performing of these types of activities in relation to objects of interest such as buildings or monuments. It would therefore seem that the function at hand has been developed for a tourist.

WO 2012/016014 A1 describes a handheld field maintenance tool configured to communicatively couple to a field device. The handheld field maintenance tool includes or is coupled to a camera configured to obtain an image relative to the field device.

There is thus still a need for improvement when comparing images of objects in industrial plants.

The present invention addresses one or more of the above mentioned problems.

### SUMMARY OF THE INVENTION

The present invention addresses this situation. The invention is therefore directed towards solving the problem of providing an improvement in the comparison of images of objects in industrial plants.

This object is according to a first aspect of the invention solved through a method as defined in claim 1 of enabling a user in an industrial plant to inspect an object of the plant, where the user is equipped with a mobile terminal, the method being performed by an inspecting device.

This object is according to a second aspect of the invention solved through an inspecting device as defined in claim 8.

This object is according to a third aspect of the invention solved through a computer program product as defined in claim 14.

The present invention has a number of advantages. It allows the correct object to be located for the comparison of images. This is especially important if different engineers are involved in the inspecting of the object. Through providing the reference image in the view-finder it is ensured that the angle used for the reference image is easily obtained also for the newly captured image, thereby ensuring a good comparison. Plant maintenance engineers can also perform preventive maintenance through more effectively following the status of the object to find out possible problems. The images can be used for sharing information between engineers and the progress of a possible issue can be followed by many users, not only one.

### BRIEF DESCRIPTION OF THE DRAWINGS

The present invention will in the following be described with reference being made to the accompanying drawings, where
Fig. 1 schematically shows an industrial plant with a process control system operating an industrial process together with a number of mobile terminals associated with plant maintenance engineers,
Fig. 2 schematically shows a front view of a first mobile terminal,
Fig. 3 schematically shows a block schematic of the first mobile terminal,
Fig. 4 shows premises of the industrial plant with a number of rooms, an object and the first mobile terminal,
Fig. 5 schematically shows a view shown in a viewfinder of the first mobile terminal,
Fig. 6 shows a flow chart of a number of method steps being performed in a method of enabling a user in an industrial plant to inspect an object of the plant, and
Fig. 7 schematically shows a data carrier with computer program code for performing the steps of the method.

### DETAILED DESCRIPTION OF THE INVENTION

In the following, a detailed description of preferred embodiments of a method, inspecting device and computer program product for enabling a user in an industrial plant to inspect an object of the plant will be given.

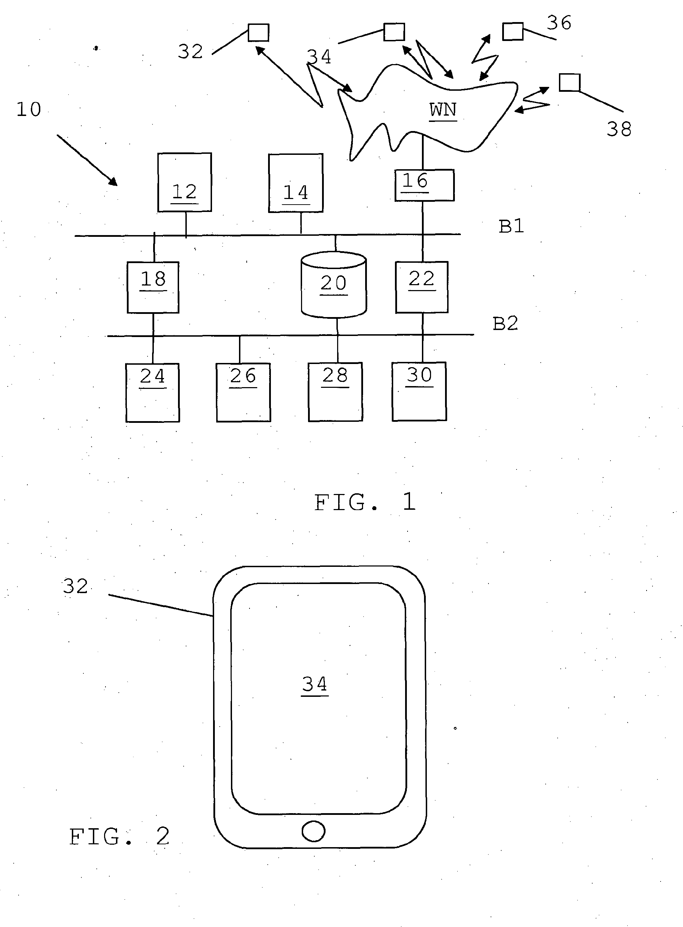

Fig. 1 schematically shows an industrial plant 10 where a process control system is provided. The process control system is a computerized process control system for controlling an industrial process. The process can be any type of industrial process, such as electrical power generation, transmission and distribution processes as well as water purification and distribution processes, oil and gas production and distribution processes, petrochemical, chemical, pharmaceutical and food processes, and pulp and paper production processes. These are just some examples of processes where the system can be applied. There exist countless other industrial processes. The process may also be other types of industrial processes such as the manufacturing of goods. The process may be monitored through one or more process monitoring computers, which communicate with a server handling monitoring and control of the process.

In fig. 1 the process control system therefore includes a number of process monitoring computers 12 and 14. These computers may here also be considered to form operator terminals and are connected to a first data bus B1. There is also a gateway 16 connected to this first data bus, which gateway 16 is connected to at least one wireless network WN. To the wireless network WN there is connected a first, second, third and fourth mobile terminal 32, 34, 36 and 38. The wireless network WN may be a local network, such as a wireless local area network (WLAN). It may also be a Bluetooth network, i.e. a network with a number of interconnected Bluetooth nodes. In some variations of the invention the mobile terminals are dual mode terminals able to communicate with both a Bluetooth or WLAN network as well as with a mobile communication network, such as a public land mobile communication network (PLMN). It should here be realized that in some variations of the invention no communication networks are used.

There is furthermore a second data bus B2 and between the first and second data busses B1 and B2 there are connected a server 18 providing control and protection of the process and a database 20 where data relating to control and protection of the process is stored. Such data relating to control and protection may here comprise process control data such as measurements and control commands, while data relating to protection may comprise alarm and event data as well as data on which alarms and events can be generated, such as measurements made in the process. There is furthermore a guiding server 22 connected between the two buses B1 and B2. This guiding server 22 may in one variation of the invention provide guiding instructions used to guide a mobile terminal. In some variations of the invention the server may also transfer a reference image to a mobile terminal. How this may be done will be described in more detail later. In other variations of the invention the guiding server is not needed. Hence, it may be omitted.

To the second data bus B2 there is furthermore connected a number of further devices 24, 26, 28 and 30. These further devices are often termed field devices forming interfaces to the process. A field device is thus an interface via which measurements of the process are being made and to which control commands are given. One or more of these field devices may furthermore be able to generate alarms. A first field device 24 is as an example an object that needs surveillance and is here exemplified by a tank. The invention will in the following be described in relation to this object. It should here furthermore be realized that such an object needing surveillance is not necessarily a field device, i.e. a device directly involved in the control of the process. It may thus be another type object in the plant needing surveillance, for instance a device being merely associated with the process.

Fig. 2 schematically shows a front view of the first mobile terminal 32. It simply comprises a display 34. The display 34 is in some variations of the invention, including the first embodiment to be described later, a touch screen via which data can be presented for the user of the mobile terminal 32 as well as via which data can be entered by the user, such as selections of various features in applications. It should be realized that in other variations of the invention the display may only be a display and the inputs provided thorough a keypad or a keyboard, a trackball, a joystick or some other buttons. The first mobile terminal 32 may furthermore be equipped with a camera lens and in this case the display may provide a viewfinder for capturing images, such as digital images.

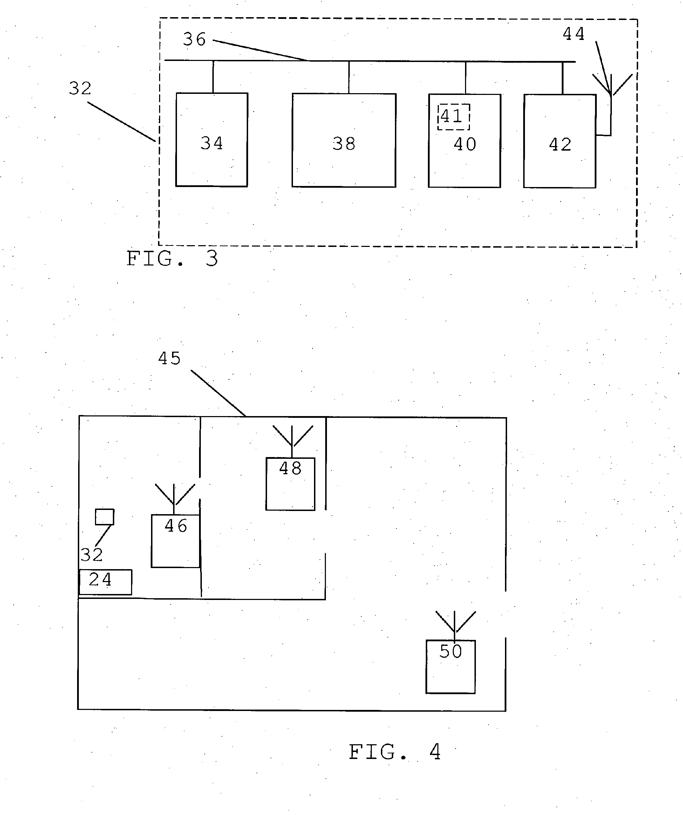

Fig. 3 shows a block schematic of the first mobile terminal 32. The first mobile terminal 32 comprises a bus 36 and to this bus there is connected the display 34, a processor 38, a program memory 40 as well as a radio communication circuit 42. The radio communication circuit 42 is furthermore connected to an antenna 44 for wireless communication with the wireless network. It should here be realized that the first mobile terminal may also comprise a second radio circuit and a second antenna for communicating with a mobile communication network. It should also be realized that in some variations the mobile terminal 32 may comprise a Global Positioning System (GPS) unit for communicating with a GPS satellite. If there is a GPS unit, then it is possible that the radio communication unit may be omitted. The mobile terminal 32 may also be provided with an accelerometer and/or a gyro. In the program memory there is provided software code which when being run by the processor forms an inspecting device 41.

Fig. 4 schematically shows a facility 45 according to one variation of the industrial plant. The facility 45 is here in the form of a building with a number of rooms. There is here a first room where there is a first wireless access point 46 of the wireless network. In this first room also the above mentioned object, here the first field device 24, is provided. In this figure also the first, mobile terminal 32 is shown as being located in the first room, which indicates that also the corresponding user is in this first room. Next to the first room there is a second room with a second wireless access point 48. The second room in turn leads to a third larger room with a third wireless access point 50. In the third room there is a door leading out of the premises 45. All the access points 46, 48 and 50 are here furthermore located close to doors leading to or from the rooms. The first wireless access point 46 is therefore provided close to a door interconnecting the first and the second rooms, the second wireless access point 48 is located close to a door interconnecting the second and the third rooms and the third wireless access point 50 is provided close to the door leading out of the building 45. The above described access point positions close to doors are advantageous in that they simplify the giving of guiding instructions. However the invention is in no way limited to these positions. Other may thus be used.

Furthermore the positions of the wireless access points 46, 48 and 50 are typically known and because of this also the positions of the first mobile terminal and consequently the user of this terminal may be known.

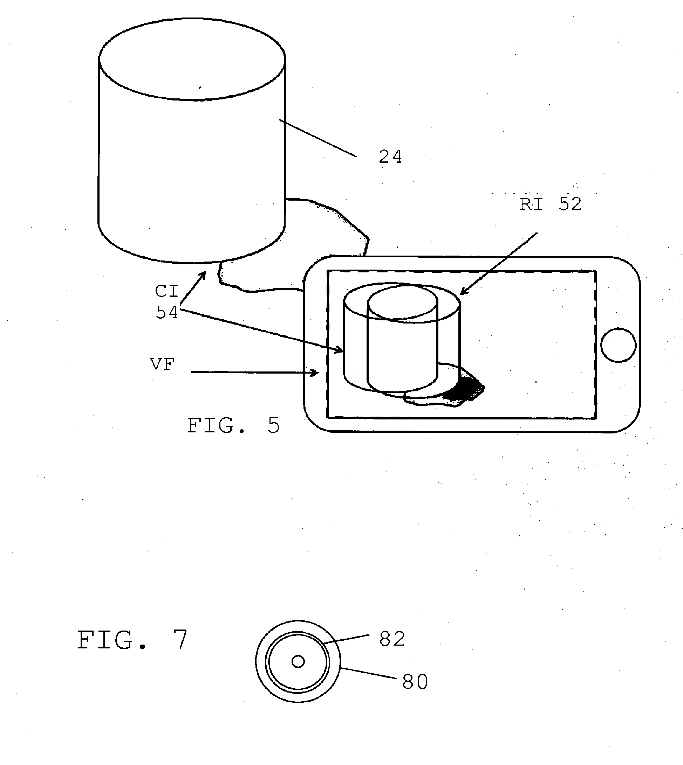

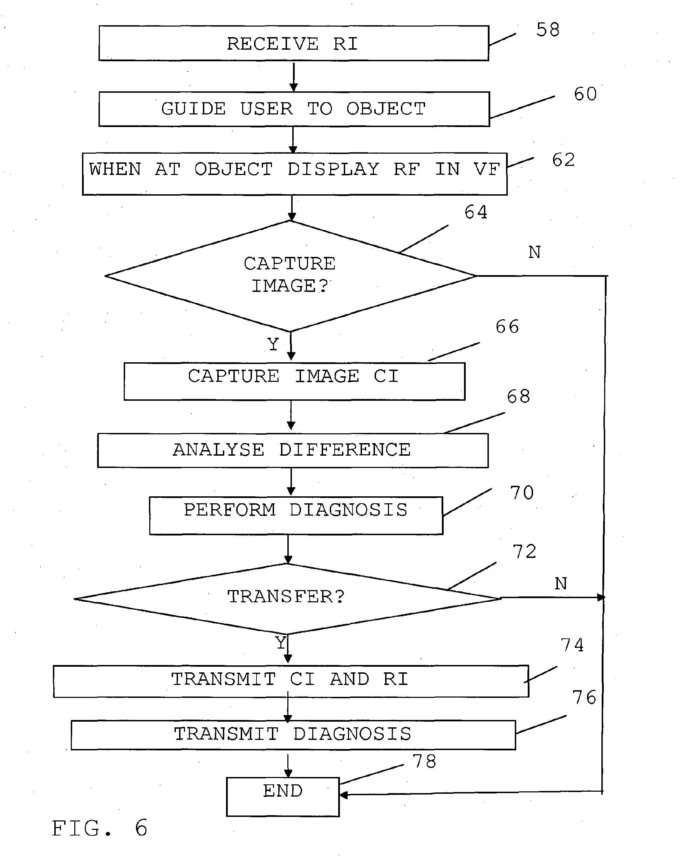

A first embodiment of the invention will now be described with reference also being made to fig. 5 and 6, where fig. 5 schematically shows a view shown in a viewfinder of the mobile terminal and fig. 6 shows a flow chart of a number of method steps being performed in a method of enabling a user in the premises of in an industrial plant to inspect an object of the plant.

The users of the mobile terminals 32, 34, 36 and 38 may typically be plant maintenance engineers performing some activity in the premises, such as inspecting plant equipment.

The user of the first mobile terminal 32 may be such a maintenance engineer.

When conducting daily morning inspection rounds at the plant, the plant maintenance engineers may check the status of plant equipment, such as the object that in this example is the first field device 24. User studies show that while doing these rounds, the engineers have traditionally used paper and a pen to write down remarks about possible problem areas and needed fixes. Afterwards when the plant maintenance engineers return to their office location, they have added these notes to the system by use of desktop computers, like the operator terminals 12 and 14.

However, in many plants mobile terminals and digital cameras have been recently introduced to assist the plant maintenance engineers in their daily work tasks. The engineers now take photos of problem areas or issues by using a camera. These photos together with notes taken are later shared with their colleagues or documented.

The photos may then be later compared with earlier photos taken of the equipment as the plant maintenance engineers want to follow a progress of equipment to figure out if there is a potential problem occurring in the future.

It may as one example be of interest to follow the progress of a water leakage at the object 24 of the plant by taking photos of the area during several days, where the object is a tank in this example.

There are a number of problems associated with the traditional way of handling this situation:
- A paper and a pen is a laborious tool to record and describe a progress of a potential issue at the plant.
- Taking photos of the scene with a mobile terminal or digital camera is an effective way of tracking a progress of a possible issue. However, it is hard to take photos from exactly the same spot at the plant to be able to accurately follow the progress of a possible issue.
- It is hard to know if the photos used for comparison are taken from the same direction. In addition, if the progress of the possible problem is documented by different persons, it is even harder to make sure if and how the other persons have taken photos of the same scene. If the photos are not representing the exact same scene, the value of comparison is decreased.

The present invention presents a tool to help plant maintenance engineers to, by use of their mobile terminals, repeatedly capture images of the same scene in a factory plant aiming to follow the progress of a possible issue.

In short, a mobile terminal will according to the invention be used to guide the engineer taking photos to the same spot and present a reference image of the object in the viewfinder in order to ensure that automatically or manual follow-up of the possible issue can be performed correctly.

The method of the first embodiment of the invention therefore starts by the inspecting device 41 of the first mobile terminal 32 receiving a reference image RI 52, step 58. This reference image 52 may be received from the guiding server 22 via the wireless network WN. The reference image 52 may therefore be received via the radio circuit 42 and antenna 44 in the first mobile terminal 32 and forwarded from the radio circuit 42 to the inspecting device 41. There may also be a position associated with this reference image 52, which is the position at which the reference image 52 was captured. Also data about this position may then be received together with the reference image 52. In the example the reference image 52 is an image of the object 24. It should here be realized that the reference image 52 may be received from another entity such as from another mobile terminal of another engineer. The reference image 52 may furthermore have been captured via the first mobile terminal 32, in which case the reference image 52 may already be provided in the first mobile terminal 32. It should therefore be understood that this receiving step is optional.

Therefore, in case the reference image 52 is captured using the first mobile terminal 32, then the plant maintenance engineer may have captured the reference image 52, which may be an image of a possible issue of the plant in relation to the object 24. It is also possible that the reference image 52 has been captured earlier by another engineer using the first mobile terminal 32.

However, in order to be able to use the reference image 52 the current user of the first mobile terminal 32 needs to be guided to the location of the object 24. Therefore the inspecting device 41 of the first mobile terminal 32 guides the user to the location of the object.

There are a number of ways in which this may be done.

The guiding server 22 may for instance continuously keep track of the users of the mobile terminals 32, 34, 36 and 38 as well as their positions in the plant 10. Positions may be obtained via the wireless network WN. The positions of the mobile terminals 32, 34, 36 and 38 may more particularly be obtained through knowledge of which wireless access points 46, 48 and 50 they are in contact with. A mobile terminal may for instance be assumed to have the position of the access point with which it is connected. The signal strength of the communication between the mobile terminal and access point may also be used to determine the distance of a mobile station from the access point, which gives a radius around the access point at which the mobile terminal may be located. This together with knowledge of the layout of the premises, such as where walls, floors and ceilings are provided, may be used for estimating the position. Furthermore, if a mobile terminal is in contact with more access points, then triangulation may be used. Here the points of intersection of the radiuses of two or three access points may be used for determining the position. Also this may be combined with knowledge of the layout of the premises 45 in order to determine the position of the mobile station.

The inspecting device 41 may in this case receive instructions from the guiding server 22 for reaching the position of the object 24. As an alternative it may itself determine what instructions are to be given.

The guiding server 22 may thus provide guiding instructions for guiding the user to the location of the object 24. The guiding instructions for the user of the first mobile terminal 32 may for instance be based on a current location of this first mobile terminal 32 and comprise a number of instructions guiding the user from this current position to the location of the object 24.

The guiding server 22 may transmit all this data with the help of the wireless network WN and more particularly using the various access points of the wireless network WN with which the first mobile terminal 32 is communicating.

The first mobile terminal 32 may thus receive the guiding instructions using the radio circuit 42 and the antenna 44. The instructions are then forwarded from the radio circuit 42 to the processor 38 which implements the inspecting device 41. It is here as an alternative possible that the inspecting device 41 itself has a set of instructions for guiding the user to the location of the object and then it itself determines the current position and the instructions to be used for guiding to the location of the object. In case both the current position and object are located outside of any premises the first mobile terminal 32 may instead use GPS for guiding. If the first mobile terminal 32 is provided with an accelerometer and/or a gyro, these may as an alternative also be used to provide the position of the first mobile station 32.

It can in this way be seen that the inspecting device 41 guides the user to the location of the object 24 using the received or own generated guiding instructions, step 60. The guiding instructions may provide directions and may furthermore be dynamically updated based on the positions of the first mobile terminal 32.

The location at which the reference image 52 was captured may thus be tracked by using GPS or indoor positioning system such as Wi-Fi or Bluetooth. Also, the position of the mobile terminal 32 can be tracked using accelerometer and gyro.

When the location of the object 24 has been reached, and in this example when the first mobile terminal 32 has reached the first room comprising the object 24, the inspecting device 41 displays the reference image 52 in the viewfinder VF provided through the display of the touch screen 34, step 62. The reference image 52 is furthermore displayed together with the view that is observable through the view-finder. The reference image 52 is thus presented together with a view that may be captured by the engineer. The reference image may for this reason be displayed semi-transparently in the view-finder. As an alternative to semi-transparent presentation it is possible that only the contours of objects in the reference image are presented in the viewfinder.

In this way the reference image 52 of the object 24 may be used for investigating the progress of the previously-mentioned issue of the object 24, which was here exemplified by a water leakage.

Thus, in order to later follow the progress of the issue, the reference image 52 of the scene of the issue can be used as a reference when taking new photos of the same scene. Hence, the viewfinder VF of the mobile terminal camera will show the reference image 52 together with the observable view so that the engineer can take a new photo 54 in a similar way. Through showing the reference image 52 in the viewfinder VF, the user will be able to align the view-finder with the object so that a new image 54 can be captured at the same distance and angle as that used for capturing the reference image 52. The follow-up photo 54 can also be taken by another person, as he knows how to take the picture using the camera viewfinder containing the reference photo.

After the reference image 52 has been presented, the inspecting device 41 therefore waits for the user of the first mobile terminal 32 to capture an image. The user may for instance select to capture an image through touching a button on the touch screen 34.

If an image capturing instructions is received, step 64, which is a user selection of the capturing of an image, then an image CI 54 is captured, step 66, by a camera function provided by the inspecting device 41.

This image 54 can then be compared with the reference image 52 in order to determine how serious the issue is.

Imaging the following scenario:
1. The plant maintenance engineer is doing his daily round at the plant.
2. He notices that there is water leakage around one device 24.
3. He decides to follow the progress of the leakage and takes a photo 52 of the scene.
4. Next week, when he conducts the same round again, he is guided to the device 24 where he last week noticed the water leakage.
5. As he wants to take a photo to compare the leakage with the photo taken last week, he opens up the camera application, which shows the earlier photo transparently in the camera viewfinder.
6. The plant engineer is now able to take a photo of the scene from the same spot by focusing the picture 54 through the earlier taken photo 52 that is shown transparently in the viewfinder.
7. By comparing and examining the reference and captured image or if more than one image is captured by comparing and examining a series of pictures the engineer can conclude that the water leakage is indeed getting worse, therefore he has enough information to indicate it as a high priority maintenance task.

It is in the first embodiment possible that the inspecting device 41 is itself able to determine the severity of the issue. In the first embodiment this is done through the inspecting device 41 analyzing the difference between the reference image 52 and the captured image 54, step 68. This may involve determining the difference through an analysis of the difference in pixel by pixel. After this difference has been determined, the inspecting device 41 may diagnose the issue. Therefore the inspecting device 41 diagnoses a condition of the object based on the analysis, i.e. it diagnoses the issue based on an analysis of the difference between the images. The difference may for instance indicate that the leakage is increased or decreased, which may be used for diagnosing how severe the leakage is.

It may optionally be possible that the results are to be transmitted to another device, such as to another mobile terminal or to the guiding server.

Therefore the inspecting device 41 may await, via the touch screen 34, a decision by the user to transfer the results to another device.

If such a decision is received, step 72, then the inspecting device 41 goes on and transmits the results. It may here transmit the captured image 54 and the reference image 52, step 74. It may also transmit the diagnosis, step 76. The transmitting may typically be done through the use of the radio circuit 42 and antenna 44. It should here be realized that in one variation, the only thing that is transmitted is the captured image 54.

After the results have been transmitted, the method is ended, step 78, which is also the case if the user would not select to capture an image, step 64, or not select to transfer results, step 72.

The above-described invention has a number of advantages. It allows the correct object to be located for the comparison of images. This is especially important if different engineers are involved in the inspecting of the object. Through providing the reference image in the view-finder it is ensured that the angle used for the reference image is easily obtained also for the newly captured image, thereby ensuring a good comparison.

There are several further benefits associated with the invention:
- Plant maintenance engineers can perform preventive maintenance through more effectively following the status of the equipment to find out possible problems.
- The images can be used for sharing information between engineers and the progress of a possible issue can be followed by many users, not only one.

The investigating device may, as was previously described, be provided in the form of one or more processors together with computer program memory including computer program code for performing it's function. As an alternative it may be provided in the form of a Application Specific Integrated Circuit (ASIC) or Field-Programmable Gate Array (FPGA). This computer program code may also be provided on one or more data carriers which perform the functionality of the present invention when the program code thereon is being loaded into a mobile terminal. One such data carrier 80 with computer program code 82, in the form of a CD ROM disc, is schematically shown in fig. 7. Such computer program may as an alternative be provided on another server and downloaded therefrom into the mobile terminal.

## Claims

1. A method of enabling a user in an industrial plant (10) to inspect an object (24) of the plant, where said user is equipped with a mobile terminal (32), the method being performed by an inspecting device (41) provided in the mobile terminal (32) equipped with a viewfinder (VF) and comprising the steps of:
- guiding (60) the user to the location of the object in the plant,
the method **characterized by**
- presenting (62) a reference image (52) of the object in the viewfinder (VF) when the location of the object has been reached in order to allow the user to capture an image (54) of the object,
- receiving a user selection to capture an image and capturing (66) an image of the object based (64) on said user selection,
- analyzing (68) the difference between the reference image and the captured image, and
- diagnosing (70) a condition of the object based on the analysis.

2. The method according to claim 1, wherein the reference image is presented together with a view that may be captured.

3. The method according to claim 2, wherein the reference image is presented semi-transparently.

4. The method according to any of claims 1 - 3, wherein the guiding comprises guiding to the same spot at the location where the reference image (52) was captured.

5. The method according to any previous claim, further comprising receiving (58) the reference image from another device.

6. The method according to any previous claim, further comprising transmitting (74) the captured image to another device.

7. The method according to claim 6, wherein the transmitting comprises transmitting also the reference image.

8. An inspecting device (41) enabling a user in a plant to inspect an object (24) of the plant, the inspecting device being provided in a mobile terminal (32) equipped with a viewfinder (VF) and being configured to
- guide the user to the location of the object in the plant,
the inspecting device **characterized by** being configured to
- present a reference image (52) of the object in the viewfinder of the mobile terminal when the location of the object has been reached in order to allow the user to capture an image of the object,
- receive a user selection to capture an image,
- capture an image (54) of the object based on said user selection, and
- analyze the difference between the reference image and the captured image and diagnose a condition of the object based on the analysis.

9. The inspecting device according to claim 8, wherein the inspecting device is configured to present the reference image together with a view that may be captured.

10. The inspecting device according to claim 8 or 9, wherein the guiding comprises guiding to the same spot at the location where the reference image (52) was captured.

11. The inspecting device according to any of claims 8 - 10, being further configured to receive the reference image from another device.

12. The inspecting device according to any of claims 8 - 11, being further configured to transmit the captured image to another device.

13. The inspecting device according to claim 12, when being configured to transmit the captured image is also being configured to transmit the reference image.

14. A computer program product enabling a user in an industrial plant (10) to inspect an object (24) of the plant, said computer program product being provided on a data carrier (80), **characterized by** said data carrier (80) comprising computer program code (82) configured to cause an inspecting device (41) provided in a mobile terminal (32) equipped with a viewfinder (VF) to, when said computer program code is loaded into the inspecting device (41), perform the method of claim 1.

## Patentansprüche

1. Verfahren, um einem Anwender in einer Industrieanlage (10) zu ermöglichen, ein Objekt (24) der Anlage zu untersuchen, wobei der Anwender mit einem mobilen Endgerät (32) ausgestattet ist, wobei das Verfahren durch eine Untersuchungsvorrichtung (41), die in dem mobilen Endgerät (32), das mit einem Sucher (VF) ausgestattet ist, vorgesehen ist, durchgeführt wird und die folgenden Schritte umfasst:
- Führen (60) des Anwenders an den Ort des Objekts in der Anlage,
wobei das Verfahren **gekennzeichnet ist durch**:
- Darstellen (62) eines Referenzbildes (52) des Objekts in dem Sucher (VF), wenn der Ort des Objekts erreicht worden ist, um dem Anwender zu erlauben, ein Bild (54) des Objektes aufzunehmen,
- Empfangen einer Anwenderauswahl zum Aufnehmen eines Bildes und Aufnehmen (66) eines Bildes des Objekts anhand (64) der Anwenderauswahl,
- Analysieren (68) des Unterschieds zwischen dem Referenzbild und dem aufgenommenen Bild, und
- Feststellen (70) eines Zustands des Objekts anhand der Analyse.

2. Verfahren nach Anspruch 1, wobei das Referenzbild zusammen mit einem Bild, das möglicherweise aufgenommen wird, dargestellt wird.

3. Verfahren nach Anspruch 2, wobei das Referenzbild halbdurchsichtig dargestellt wird.

4. Verfahren nach einem der Ansprüche 1-3, wobei das Führen das Führen an dieselbe Stelle an dem Ort, wo das Referenzbild (52) aufgenommen worden ist, umfasst.

5. Verfahren nach einem der vorhergehenden Ansprüche, das ferner das Empfangen (58) des Referenzbildes von einer anderen Vorrichtung umfasst.

6. Verfahren nach einem der vorhergehenden Ansprüche, das ferner das Übertragen (74) des aufgenommenen Bildes an eine andere Vorrichtung umfasst.

7. Verfahren nach Anspruch 6, wobei das Übertragen auch das Übertragen des Referenzbildes umfasst.

8. Untersuchungsvorrichtung (41), die einem Anwender in einer Anlage ermöglicht, ein Objekt (24) der Anlage zu untersuchen, wobei die Untersuchungsvorrichtung in einem mobilen Endgerät (32), das mit einem Sucher (VF) ausgestattet ist, vorgesehen ist und zu Folgendem konfiguriert ist:
- Führen des Anwenders an den Ort des Objekts in der Anlage,
wobei die Untersuchungsvorrichtung **dadurch gekennzeichnet ist, dass** sie zu Folgendem konfiguriert ist:
- Darstellen eines Referenzbildes (52) des Objekts in dem Sucher des mobilen Endgeräts, wenn der Ort des Objekts erreicht worden ist, um dem Anwender zu erlauben, ein Bild des Objektes aufzunehmen,
- Empfangen einer Anwenderauswahl zum Aufnehmen eines Bildes,
- Aufnehmen eines Bildes (54) des Objekts anhand der Anwenderauswahl, und
- Analysieren des Unterschieds zwischen dem Referenzbild und dem aufgenommenen Bild und Feststellen eines Zustands des Objekts anhand der Analyse.

9. Untersuchungsvorrichtung nach Anspruch 8, wobei die Untersuchungsvorrichtung konfiguriert ist, das Referenzbild zusammen mit einem Bild, das möglicherweise aufgenommen wird, darzustellen.

10. Untersuchungsvorrichtung nach Anspruch 8 oder 9, wobei das Führen das Führen an dieselbe Stelle an dem Ort, wo das Referenzbild (52) aufgenommen worden ist, umfasst.

11. Untersuchungsvorrichtung nach einem der Ansprüche 8-10, die ferner zum Empfangen des Referenzbildes von einer anderen Vorrichtung konfiguriert ist.

12. Untersuchungsvorrichtung nach einem der Ansprüche 8-11, die ferner zum Übertragen des aufgenommenen Bildes an eine andere Vorrichtung konfiguriert ist.

13. Untersuchungsvorrichtung nach Anspruch 12, die dann, wenn sie zum Übertragen des aufgenommenen Bildes konfiguriert ist, auch zum Übertragen des Referenzbildes konfiguriert ist.

14. Computerprogrammprodukt, das einem Anwender in einer Industrieanlage (10) ermöglicht, ein Objekt (24) der Anlage zu untersuchen, wobei das Computerprogrammprodukt auf einem Datenträger (80) vorgesehen ist, **dadurch gekennzeichnet, dass** der Datenträger (80) Computerprogrammcode (82) umfasst, der konfiguriert ist, eine Untersuchungsvorrichtung (41), die in einem mobilen Endgerät (32), das mit einem Sucher (VF) ausgestattet ist, vorgesehen ist, zum Durchführen des Verfahrens nach Anspruch 1 zu veranlassen, wenn der Computerprogrammcode in die Untersuchungsvorrichtung (41) geladen ist.

## Revendications

1. Procédé pour permettre à un utilisateur, dans une installation industrielle (10), d'inspecter un objet (24) de l'installation, où ledit utilisateur est équipé d'un terminal mobile (32), le procédé étant exécuté par un dispositif d'inspection (41) pourvu dans le terminal mobile (32) équipé d'un viseur (VF), et comprenant les étapes suivantes :
- guider (60) l'utilisateur vers l'emplacement de l'objet dans l'installation, le procédé étant **caractérisé par** les étapes suivantes :
- présenter (62) une image de référence (52) de l'objet dans le viseur (VF) lorsque l'emplacement de l'objet a été atteint pour permettre à l'utilisateur de capturer une image (54) de l'objet,
- recevoir une sélection de l'utilisateur pour capturer une image et capturer (66) une image de l'objet sur la base (64) de ladite sélection de l'utilisateur,
- analyser (68) la différence entre l'image de référence et l'image capturée, et
- diagnostiquer (70) un état de l'objet sur la base de l'analyse.

2. Procédé selon la revendication 1, dans lequel l'image de référence est présentée avec une vue qui peut être capturée.

3. Procédé selon la revendication 2, dans lequel l'image de référence est présentée en semi-transparence.

4. Procédé selon l'une quelconque des revendications 1 à 3, dans lequel le guidage comprend un guidage vers le même point à l'emplacement où l'image de référence (52) a été capturée.

5. Procédé selon l'une quelconque des revendications précédentes, comprenant en outre de recevoir (58) l'image de référence à partir d'un autre dispositif.

6. Procédé selon l'une quelconque des revendications précédentes, comprenant en outre de transmettre (74) l'image capturée à un autre dispositif.

7. Procédé selon la revendication 6, dans lequel la transmission comprend de transmettre également l'image de référence.

8. Dispositif d'inspection (41) permettant à un utilisateur, dans une installation, d'inspecter un objet (24) de l'installation, le dispositif d'inspection étant pourvu d'un terminal mobile (32) équipé d'un viseur (VF) et étant configuré pour :
- guider l'utilisateur vers l'emplacement de l'objet dans l'installation, le dispositif d'inspection étant **caractérisé en ce qu'**il est configuré pour :
- présenter une image de référence (52) de l'objet dans le viseur du terminal mobile lorsque l'emplacement de l'objet a été atteint pour permettre à l'utilisateur de capturer une image de l'objet,
- recevoir une sélection de l'utilisateur pour capturer une image,
- capturer une image (54) de l'objet sur la base de ladite sélection de l'utilisateur, et
- analyser la différence entre l'image de référence et l'image capturée, et diagnostiquer un état de l'objet sur la base de l'analyse.

9. Dispositif d'inspection selon la revendication 8, dans lequel le dispositif d'inspection est configuré pour présenter l'image de référence avec une vue qui peut être capturée.

10. Dispositif d'inspection selon la revendication 8 ou la revendication 9, dans lequel le guidage comprend un guidage vers le même point à l'emplacement où l'image de référence (52) a été capturée.

11. Dispositif d'inspection selon l'une quelconque des revendications 8 à 10, étant en outre configuré pour recevoir l'image de référence à partir d'un autre dispositif.

12. Dispositif d'inspection selon l'une quelconque des revendications 8 à 11, étant en outre configuré pour transmettre l'image capturée à un autre dispositif.

13. Dispositif d'inspection selon la revendication 12, qui, lorsqu'il est configuré pour transmettre l'image capturée est également configuré pour transmettre l'image de référence.

14. Produit programme informatique permettant à un utilisateur, dans une installation industrielle (10), d'inspecter un objet (24) de l'installation, ledit produit programme informatique étant pourvu sur un support de données (80), **caractérisé en ce que** ledit support de données (80) comprenant un code de programme informatique (82) configuré pour amener un dispositif d'inspection (41) pourvu dans un terminal mobile (32) équipé d'un viseur (VF) pour, lorsque ledit code de programme informatique est chargé dans le dispositif d'inspection (41), exécuter le procédé de la revendication 1.
